Europäisches Patentamt

European Patent Office

Office européen des brevets

(11) Publication number: **0 144 202**
**B1**

(12) **EUROPEAN PATENT SPECIFICATION**

(45) Date of publication of patent specification: **31.05.89**

(21) Application number: **84308152.2**

(22) Date of filing: **23.11.84**

(51) Int. Cl.⁴: **G 06 K 7/10,** G 06 K 9/20

(54) **Optical reader.**

(30) Priority: **25.11.83 JP 222550/83**

(43) Date of publication of application:
**12.06.85 Bulletin 85/24**

(45) Publication of the grant of the patent:
**31.05.89 Bulletin 89/22**

(84) Designated Contracting States:
**DE FR GB IT NL SE**

(56) References cited:
**EP-A-0 092 061**
**US-A-3 275 806**
**US-A-3 643 069**
**US-A-4 408 344**

(73) Proprietor: **SUMITOMO ELECTRIC INDUSTRIES
LIMITED
No. 15, Kitahama 5-chome Higashi-ku
Osaka-shi Osaka 541 (JP)**

(72) Inventor: **Satoh, Koji
c/o Sumitomo Electric Industries Ltd.
Osaka Works (JP)**

(74) Representative: **Arthur, Bryan Edward et al
Withers & Rogers 4 Dyer's Buildings Holborn
London EC1N 2JT (GB)**

## Description

### 1. Field of the invention

The present invention relates to optical readers of the type comprising a scanner unit having a two-dimensional array of photo-electric elements.

### 2. Prior art

Optical readers are widely used in conjunction with merchandising and accounting systems of department stores, super-markets and, recently, in cargo transportation systems in order to obtain information concerning sales figures, inventories, as well as destinations of products transported. In a system called "Point of Sales", for instance, product information about product species, manufacturing lot and price are described on a merchandising tag in an optically readable form, and the information obtained through a reader is sent to computer system and, thereafter, processed to provide necessary data.

The ways of expressing product data are not uniform. For example, in department stores, merchandizing tags for foods and beverages frequently have numerals and bar codes whereas data on clothes are expressed by alphanumeric characters. Therefore, it has become necessary to install optical readers which are capable of reading alphanumeric characters and of recognizing bar code symbols respectively.

US Patent 4,402,088 describes a hand held optical reader which will read either bar code or alphanumeric format without an operator having to switch between the two formats depending upon which the unit is reading.

Japanese Patent Application No. 13307/77, (Feb. 9, 1977) of Saitoh, published under Publication No. 98733/78 (Aug. 29, 1978), describes a method of reading two formats using the same scanner in entirely the same way as those disclosed in U.S. Patent 4,402,088.

According to both of these references, the hand held character reader produces electrical signals representative of data scanned from a document and processes the so-obtained data by two examination means concurrently to produce on output representative either of alphanumeric character or bar code followed by "gating out" one or other of the outputs of the two examination means, but not both of them.

In the above cited references there is disclosed a first processing means wherein the binary signals output from the photoelectric elements are processed to provide recognisable results in the form of characters, and a second processing means wherein the binary signals are processed concurrently in order to obtain recognisable results in the form of a bar code.

The final recognisable results are selected when they are meaningful to an operator. When operating the methods disclosed in the above references, there is high possibility for the conventional optical reader to unnecessarily process signals of a pattern which is neither a character nor a bar code, and this leads to occasional misreading of meaningless stains or spots on the surface of paper.

EP—A—92,061 discloses an optical reader comprising a scanner unit, said scanner unit comprising an image sensor having a two-dimensional array of photoelectric elements, alphanumeric character reading means responsive to signals from said scanner unit to read alphanumeric characters scanned by said scanner unit, barcode reading means responsive to signals from said scanner unit to read a barcode scanned by said scanner unit, and output selection means arranged to select output signals from either said alphanumeric character reading means or said barcode reading means according to whether alphanumeric characters or a barcode are being scanned by said scanner unit.

### 4. Summary of the invention

An optical reader in accordance with the present invention is characterised in that said alphanumeric character reading means and barcode reading means are coupled to gating means, said gating means being arranged to measure a dimension of a section of a scanned character or barcode and to inhibit either said barcode reading means or said alphanumeric character reading means according to whether the measured dimension is appropriate to a section of an alphanumeric character or to a section of barcode.

Preferred features of the invention are defined in the dependent claims.

### 5. Brief description of the drawings

The invention will now be described by way of example, with reference to the accompanying drawings in which:

Fig. 1 is a block diagram of an optical reader in accordance with the present invention;

Fig. 2 illustrates the binary pattern of the alphanumeric character "2";

Fig. 3 shows partial view of a binary pattern of a barcode format;

Fig. 4 illustrates a bar code format;

Fig. 5 shows construction of switching gate (21), and,

Fig. 6(a)—(d) show signals detected during the process of recognizing bar code format, and

Fig. 6(e)—(f) show black and white bars detected after processing.

In the following description, the undermentioned items have been assigned the reference numbers indicated, viz.:

1   scanner
2   human hand;
3   sheet of paper;
4   projection lamp;
5   focusing lens;
6   image sensor;
7   binary circuit;
10   character segmentation circuit;
11   character feature extracting circuit;
12   recognition circuit (1);
13   flag (1);

14 flag (2);
15 reference circuit;
16 counter;
17 standard bar-count memory;
18 bar count normalizing circuit;
19 bar distinction circuit;
20 recognition circuit (2);
21 switching gate;
22 distinction flag;
23 selection gate;
30 photoelectric element;
31 OR gate;
32 ROM (read only memory), and,
33 register.

## 6. Description of the preferred embodiments

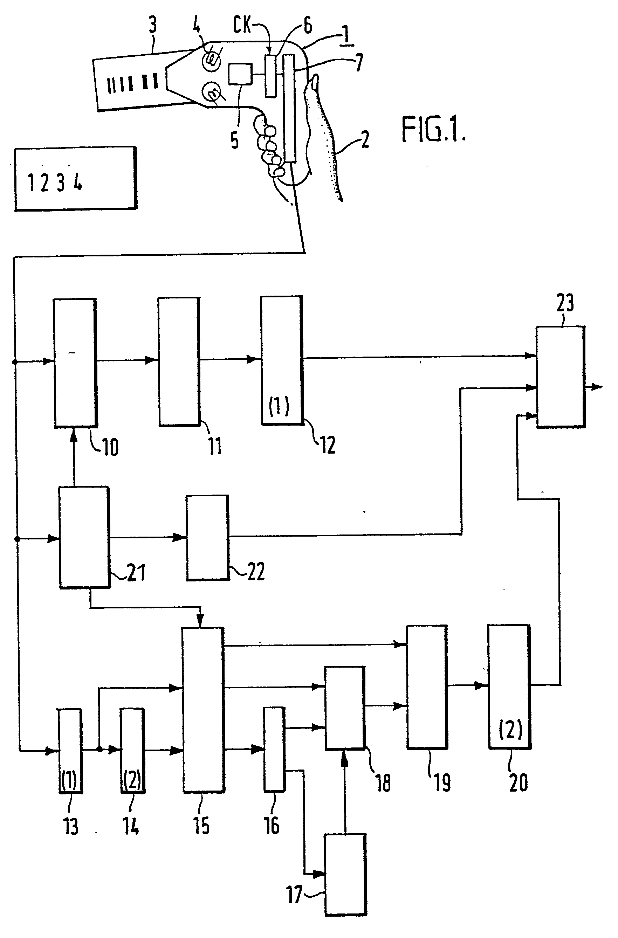

Fig. 1 is a block diagram of the optical reader of the present invention.

Information expressed on a sheet of paper (3) by alphanumeric character format or bar code format is scanned by a hand held scanner (1) equipped with an image sensor (6) composed of a two dimensional array of photoelectric elements. Light beams from a projection lamp (4) are reflected by both a character or bar code as well as the surface of paper, and a pattern corresponding to the object information is focussed on an image sensor (6) through an optical forming lens (5).

The degrees of intensity of the reflected beams vary depending on from where they are reflected and, therefore, the output signals from photoelectric elements of the image sensor (6) can be digitalized according to a threshold level and expressed by binary circuit (7) corresponding to character/bar code and paper background respectively. For instance, character/bar code (black zone) is signaled as "1" and paper background (white zone) is signaled as "0".

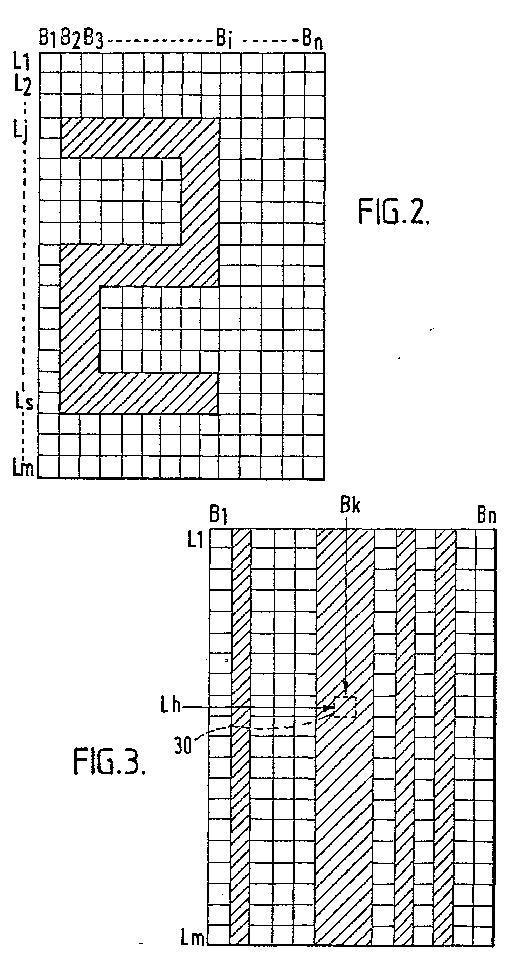

Fig. 2 illustrates a binary pattern of character format "2" in an image sensor with a two-dimensional array of n×m photoelectric elements. The black zone is distinguished from white zone by hatching as shown in Figure 2. The binary circuit (7) initiates an output digital signal corresponding to the output of photoelement in the column B1 and line L1.

The output signal corresponding to the photoelectric element in column B2 in the same line L1 in the array is digitalized in the same manner.

When all of the output signals in line L1 have been digitalized and output in the order of B1, B2, ... Bi ... Bn, photoelements in line L2 are digitalized and output in the same manner until all photoelements in all lines are processed by the circuit (7). Since the scanning period is very short compared with the movement of the hand held scanner, a plurality of binary patterns are obtained.

The method of recognizing a barcode format is described below with reference to Figure 3, which illustrates a barcode as detected by an image sensor.

A switching gate (21) determines whether the binary pattern is derived from a character or a set of bar codes as follows:

As shown in Fig. 3 photoelectric elements are disposed in a two-dimensional n×m array consisting of lines L1—Lm, and columns B1—Bn. Black bars of the format are indicated by hatching within the corresponding binary pattern.

The photoelement which is located in line Lh and column Bk is utilized for recognizing the presence of a bar code format and switching gate (21) is composed of an OR Gate (31), a read only memory (ROM) (32) and a register (33).

The OR Gate (31) determines the logical sum of the binary signals of the black bars in the adjacent successive three columns of Bk−1, Bk and Bk+1 on line Lh for every line of the sensor array. Therefore, the logical sum becomes "1" when a black bar is present on at least one photoelectric element in the above three columns. A signal corresponding to the logical sum of the binary signals of Bk−1, Bk, and Bk+1 in line L1 is utilized as an address signal to ROM (32) together with the content of register (33) where its contents have been cleared each time just before the signal from the first line L1 is outputted.

The logical sum signal corresponding to line L2 is outputted as an address signal to ROM (32) together with the contents of the register (33) related to the line L1. Similar procedures are repeated until all of the lines from L1 to Lm have become scanned on the successive three columns of Bk−1, Bk, and Bk+1.

ROM (32) has a register (33) for determining the necessary status of bar code formats and thus the status of the presently scanned signals of bar code formats are recognized through the output of the register (33).

Determination of whether scanned information on a sheet is expressed by a bar code format or alphanumeric format is judged in the following manner:

When, (i) the logical sum in columns Bk−1, Bk, and Bk+1 on line L1 is A1 and, for line Lm the logical sum is Am;

(ii) the number of successive lines where each of the logical sum is equal to "1", is "a", and

(iii) when the presence of a black zone is not indicated by the logical sums on both lines adjacent to the consecutive "a" lines in which the logical sums are "1"s,

the object pattern corresponds to an alphanumeric character format and

$$b \leqq a \leqq c \qquad (1)$$

where b and c are predetermined positive constant values respectively.

When the object pattern is a bar code then:

$$a \geqq d \qquad (2)$$

where d is a predetermined positive constant depending on the (vertical) length of the bar code format to be scanned, in provisions of either of the logical sum of the binary signals are "1" for the first and last lines of the binary pattern.

In the example above, the logical sum is from three columns Bk−1, Bk and Bk+1; however the logical sum may use more columns and possibly even all of the columns, i.e. B1 to Bn.

After the object pattern under scan is determined in terms of its category, the pattern is recognized and identified according to the following methods:

A binary pattern of alphanumeric format is illustrated in Fig. 2, where corresponding photoelectric elements of an image sensor are shown. In order to determine whether the character is located within sight of the image sensor, the presence of the character pattern is confirmed by means of character segmentation circuit (10).

The circuit (10) operates, for instance, in such a manner that when the character position is in an appropriate position to produce character signals when the binary signal is "0" (white background) in every photoelectric element in column B1, and when signal "1" which is indicative of the presence of a character is detected in at least one column B, then only "0" signals are obtained from the final column B2. As described above, the character segmentation circuit (10) operates only after the switching gate (21) has determined that the scanned object pattern corresponds to an alphanumeric format and outputs signals to the circuit (10). Consequently, the above described position detection is not carried out when the object pattern is determined as one which corresponds to a bar code format.

Method of character recognition based on its binary pattern is well known. For instance, US Patent No. 4,180,800 discloses a typical method for extracting character-feature either in line or column segments of the binary pattern followed by trailing a status transition flow diagram according to the order of occurrence of its features.

According to the disclosure of the US Patent No. 4,180,800, each segment feature may be extracted and classified into "feature code" categories.

In the case of the binary pattern in Fig. 2, line Lj provides a feature category of "a" along horizontal line while the segment in line Lj+2 is classified into a feature of "a spot on the right-side marginal segment."

The combination of the character features in the order of their occurrence provides final recognition results of alphanumeric format "2" as indicated in Fig. 2.

A bar code format may also be recognized by means of circuits (15)—(20) as shown in Fig. 1. As it generally occurs in scanning a character format that scanning of the binary pattern in Fig. 3 is also completed within a relatively short period of time (200 micro-seconds) for one full scanning from line L1 to line Lm, a plurality of scanning results are obtained during one passage of an image sensor over a bar code format. For recognizing a bar code format, the number of occurrences of either "black" or "white" bars is detected by utilizing a selected number of photoelectric elements in a sensor array. The widths of the bars are determined based on the above number of occurrences of either of the bars during the scan. The method of recognizing a bar code format is described in detail below.

A bar code format is recognized utilizing a photoelectric element (30), which is located in line Lh on column Bk in the alignment of the elements. In Fig. 1, which illustrates a preferred embodiment of the present invention, binary circuit (7) outputs a signal to the first colour flag (13) indicating whether the binary signal from the photoelectric element (30) is "0" (white background) or "1" (black bar). When the next signal from the circuit (7) is output to the first colour flag (13), the contents of (13) have already been transferred to the second colour flag (14), indicating precedent status of the first colour flag (13).

Reference circuit (15) compares the contents of the first colour flag (13) with those of the second colour flag (14) and counter (16) count the number of times that the contents of the two flags are the same. When two signals are different, and either a white bar or a black bar has passed over the photoelectric element (30), and when detection of width of either of white bar or black bar has been completed, reference circuit (15) outputs signals to normalizing circuit (18) and counter (16) clear its contents.

There is high probability of misreading some stains or granules of dust on the surface of a sheet of paper as black bars of a bar code format when they are scanned by conventional optical reader. In the device of the present invention, the contents of the counter are cleared only when the object binary pattern represents a bar code format and when a switching gate (21) outputs a signal to reference circuit (15) thus eliminating any misreading due to noise caused by substances on the paper surface other than actual objects to be read.

The present invention also eliminates, or at least considerably reduces, mis-counting the numbers of either black bars or white bars caused by any inconsistency in the scanning velocity of a hand held scanner when passed over the surface of paper. To this end, both "start marks" and "stop marks" which are usually provided in a bar code format are detected by the scanner.

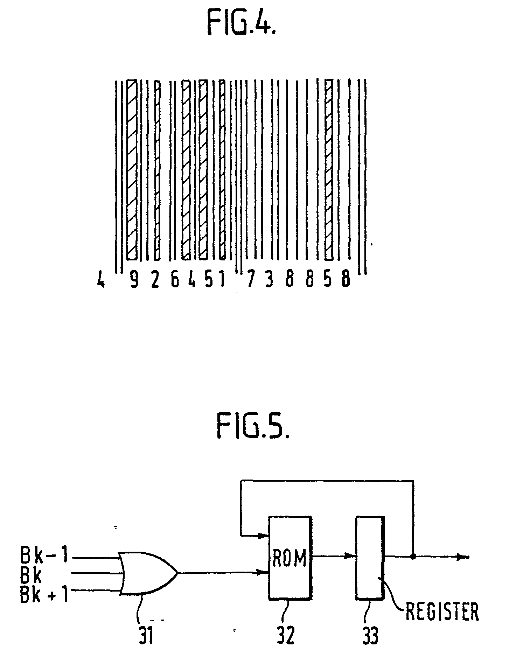

The above marks are illustrated in Fig. 4 and the distance between a start mark and a stop mark is usually predetermined. An image sensor begins to scan bar code format on either of the start mark or stop mark and when the first black bar is detected, the contents of counter (16) is set in standard number memory (17).

A bar count normalizing circuit (18) adjusts the number of pulses for a black or a white bar based upon a standard number of pulses taken for a start mark or a stop mark.

Thus, a standard black bar pulse count "A" in a memory 17 is compared with an observed pulse count "B" in counter 16 for a black bar or for a white bar and the value "B" is adjusted in accordance with the following equation:

$$Cadj = k \times B/A \qquad (3)$$

where k is a predetermined positive value, and Cadj is an adjusted pulse count.

The output signal of normalizing circuit 18 represents the width of a black or a white bar.

The output of normalizing circuit (18) corresponds to the width of either a black bar or a white bar. Bar code distinction circuit (19) distinguishes a black bar from a white bar and detects bar-width by referring both the bar-width signal outputted by the normalizing circuit (18) and the status signal from reference circuit (15).

A second recognition circuit (20) recognizes numerals or marks depending on the occurrence of black bars and white bars with references to their width after a series of information concerning a set of bar codes within an area defined by a pair of start mark and stop mark have been received.

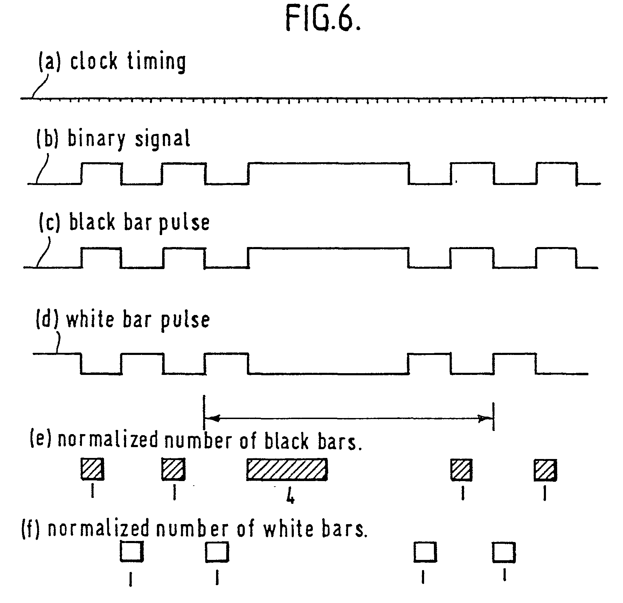

Fig. 6 illustrates signals when bar code format in Fig. 4 is scanned by traversing the hand held scanner of Fig. 1. Clock time for scanning is shown on line (a) and digital signals outputted by binary circuit (7) are shown in pulse signal form (b). References (c) and (d) show relevant number of signals detected for black bar and white bar respectively.

These signals are normalized as illustrated in (e) and (f). As is understood from Fig. 6(e) and Fig. 6(f), both of the first and the second black bars are either a start mark or a stop mark. A figure begins at the first "white bar" followed by "black bar"/ "white gap"/"black bar". The second black bar is used as a stop mark. According to the order of occurrence of above described bars, a white bar (having a unit width) a black bar (having four units of width), a white bar (having a unit width) are observed. The recognition results for this bar code format is found to be "9" when above order of occurrence is referred to a predetermined code principles.

A selection circuit (23) outputs final recognition results based on information provided by the first recognition circuit (12), the second recognition circuit (20) and decision flag (22). According to the description of the preferred embodiments of the present invention, bar cod recognition is performed by utilizing a photoelectric element (30).

It will also be readily understood that the same results are obtained by utilizing predetermined number of elements in an array.

In Fig. 1, which illustrates the construction of one optical reader of the present invention, binary circuit (7) is located in a body of a hand held scanner as an element. It should, however, also readily be understood that the circuit (7) may be installed in processing portion, if such a design is appropriate.

As described above, the present invention provides an optical reader which is capable of recognizing both alphanumeric and bar code format with one single scanner.

An optical reader recognizes either an alphanumeric character or a bar code format after determining whether the digitalized object pattern is an alphanumeric character or bar code and thus enables merchandise tags of both formats to be read more accurately than with a conventional reading device.

**Claims**

1. An optical reader comprising a scanner unit (1), said scanner unit comprising an image sensor (6) having a two-dimensional array of photoelectric elements, alphanumeric character reading means (10, 11, 12) responsive to signals from said scanner unit to read alphanumeric characters scanned by said scanner unit, barcode reading means (13, 14, 15, 16, 17, 18, 19, 20) responsive to signals from said scanner unit to read a barcode scanned by said scanner unit, and output selection means (21, 23) arranged to select output signals from either said alphanumeric character reading means or said barcode reading means according to whether alphanumeric characters or a barcode are being scanned by said scanner unit, characterised in that said alphanumeric character reading means and barcode reading means are coupled to gating means (21), said gating means being arranged to measure a dimension of a section of a scanned character or barcode and to inhibit either said barcode reading means or said alphanumeric character reading means according to whether the measured dimension is appropriate to a section of an alphanumeric character or to a section of barcode.

2. An optical reader as claimed in claim 1 wherein said dimension is the height of said section of a scanned character or barcode.

3. An optical reader as claimed in claim 1 or claim 2 wherein said gating means (21) is arranged to derive the logical sum of binary digital signals derived from a group of respective adjacent photoelectric elements (Bk−1, Bk, Bk+1), to compare said logical sum with the logical sum of binary digital signals derived from an adjacent group of such photoelectric elements, and to measure said dimension by repeatedly comparing such logical sums until successive logical sums are found to differ.

4. An optical reader as claimed in any preceding claim wherein said barcode reading means (13, 14, 15, 16, 17, 18, 19, 20) comprises means (13, 14, 15, 16) for measuring bar width and memory means (17) containing stored data representative of standard bar widths, said barcode reading means being arranged to be disabled, even if not inhibited by said gating means (21), if measured bar width does not correspond to a standard bar width.

5. An optical reader as claimed in any preceding claim wherein said output selection means (23) is controlled by a binary control signal from said gating means (21).

6. An optical reader as claimed in any preceding claim wherein said barcode reading means (13, 14, 15, 16, 17, 18, 19, 20) is arranged to scan digitised outputs of said photoelectric elements at a predetermined clock frequency and to feed successive digital signal samples to a counter (16), said counter being arranged to count the number of samples between signal transitions and to derive the bar width as a function of said clock frequency.

7. An optical reader as claimed in any preceding claim wherein said barcode reading means (13, 14, 15, 16, 17, 18, 19, 20) is arranged to recognise "start" and "stop" portions of barcode and comprises a recognition circuit (20) which is responsive to the order of occurrence of signals representative of light and dark bars between said "start" and "stop" portions to read a barcode character between said portions.

8. An optical reader as claimed in any preceding claim wherein said barcode reading means (13, 14, 15, 16, 17, 18, 19, 20) is arranged to reorganise "start" and "stop" portions of barcode a predetermined distance apart and comprises a barcode normalizing circuit (18) which is arranged to normalise the measured bar width in dependence upon the measured distance between said "start" and "stop" portions.

9. An optical reader as claimed in any preceding claim wherein said barcode reading means (13, 14, 15, 16, 17, 18, 19, 20) is responsive both to bar width and to bar colour and is arranged to recognise barcode characters by comparing detected patterns of bar width and bar colour with stored patterns of bar width and bar colour.

**Patentansprüche**

1. Optischer Abtaster mit einer Abfrageeinheit (1), die einen Bildsensor (6) mit einer zweidimensionalen Anordnung photoelektrischer Elemente enthält, einem Zeichenabtastmittel (10, 11, 12) für alphanumerische Zeichen, das auf von der Abfrageeinheit ausgehende Signale anspricht, um alphanumerische Zeichen zu ertasten, die von der Abfrageeinheit erfragt worden sind, einem Strichmarkierungsabtastmittel (13, 14, 15, 16, 17, 18, 19, 20), das auf Signale der genannten Abfrageeinheit anspricht, um eine Strichmarkierung zu ertasten, die von der Abfrageeinheit erfragt wurden und mit einem Ausgangssignalauswahlmittel (21, 23) in einer Anordnung zur Auswahl von Ausgangssignalen von entweder dem genannten Zeichenabtastmittel für alphanumerische Zeichen oder dem Strichmarkierungsabtastmittel, je nachdem ob alphanumerische Zeichen oder eine Strichmarkierung von der Abfrageeinheit erfragt werden, dadurch gekennzeichnet, daß das Abtastmittel für alphanumerische Zeichen und das Abtastmittel für Strichmarkierungen mit einem Signalauswertungsmittel (21) gekoppelt sind, wobei das Signalauswertungsmittel zur Messung der Erstreckung eines Abschnittes eines erfragten Zeichens oder einer erfragten Strichmarkierung und zum Sperren entweder des Strichmarkierungsabtastmittels oder des Abtastmittels für alphanumerische Zeichen angeordnet ist, je nachdem ob die gemessene Erstreckung einem Abschnitt eines alphanumerischen Zeichens oder einem Abschnitt der Strichmarkierung entspricht.

2. Optischer Abtaster, wie in Anspruch 1 beansprucht, bei dem die genannte Erstreckung die Höhe des Abschnittes eines erfragten Zeichens oder einer Strichmarkierung ist.

3. Optischer Abtaster, wie in Anspruch 1 oder Anspruch 2 beansprucht, bei dem das genannte Signalauswertungsmittel (21) angeordnet ist, um die logische Summe binärer digitaler Signale zu bilden, die von einer Gruppe jeweils benachbarter photoelektrischer Elemente (BK−1, BK, BK+1) stammen, um diese logische Summe mit der logischen Summe binärer digitaler Signale zu vergleichen, die von einer benachbarten Gruppe solcher photoelektrischer Elemente stammen und um die genannte Erstreckung durch wiederholtes Vergleichen solcher logischer Summen zu ermitteln, bis aufeinanderfolgende logische Summen zur Unterscheidung gefunden werden.

4. Optischer Abtaster, wie in einem beliebigen der vorhergehenden Ansprüche beansprucht, bei dem das Strichmarkierungsabtastmittel (13, 14, 15, 16, 17, 18, 19, 20) ein Mittel (13, 14, 15, 16) zum Messen der Strichbreite und ein Speichermittel (17) enthält, dessen gespeicherte Daten repräsentativ für Standardstrichbreiten sind, wobei das Strichmarkierungsabtastmittel umwirksam ist, wenn die gemessene Strichbreite nicht einer Standardstrichbreite entspricht, auch wenn es nicht von dem genannten Signalauswertungsmittel (21) gesperrt ist.

5. Optischer Abtaster, wie in einem jeden beliebigen der vorhergehenden Ansprüche beansprucht, bei dem das genannte Ausgangssignalauswahlmittel (23) durch ein binäres Steuersignal vom genannten Signalauswertungsmittel (21) gesteuert wird.

6. Optischer Abtaster, wie in einem jeden beliebigen der vorhergehenden Ansprüche beansprucht, bei dem das Strichmarkierungsabtastmittel (13, 14, 15, 16, 17, 18, 19, 20) angeordnet ist, um digitalisierte Ausgangssignale der genannten photoelektrischen Elemente mit vorgegebener Zeitfrequenz zu erfragen und einem Zähler (16) aufeinanderfolgende digitale Signalstichproben zuzuführen, wobei der Zähler angeordnet ist, um die Anzahl der Stichproben zwischen Signalübertragungen zu zählen und die Strichbreite als Funktion der genannten Zeitfrequenz zu erhalten.

7. Optischer Abtaster, wie in einem jeden beliebigen der vorhergehenden Ansprüche beansprucht, bei dem das Strichmarkierungsabtastmittel (13, 14, 15, 16, 17, 18, 19, 20) angeordnet ist, um "Start"- und "Stop"-Abschnitte von Strichmarkierungen zu ermitteln und einen Erkennungskreis (20) einschließt, der auf den Befehl von Signalen anspricht, die Hell- und Dunkelstriche zwischen den "Start"- und "Stop"-Abschnitten repräsentieren, um eine Strichmarkierung zwischen diesen Abschnitten zu ertasten.

8. Optischer Abtaster, wie in einem jeden beliebigen der vorhergehenden Ansprüche beansprucht, bei dem das Strichmarkierungsabtastmittel (13, 14, 15, 16, 17, 18, 19, 20) angeordnet ist, um "Start"- und "Stop"-Abschnitte auf vorbestimmte Abstände festzulegen und einen Strichmarkierungsnormalisierungskreis (18) enthält, der zur Normalisierung der gemessenen Strickbreite abhängig vom gemessenen Abstand zwischen diesen "Start"- und "stop"-Abschnitten angeordnet ist.

9. Optischer Abtaster, wie in einem jeden beliebigen der vorhergehenden Ansprüche beansprucht, wobei das Strichmarkierungsabtastmittel (13, 14, 15, 16, 17, 18, 19, 20) sowohl auf die Strichbreite als auch die Strichfarbe anspricht und zur Erkennung von Strichmarkierungseigenschaften angeordnet ist, indem ermittelte Muster von Strichbreiten und Strichfarben mit gespeicherten Mustern von Strichbreite und Strichfarbe verglichen werden.

**Revendications**

1. Un lecteur optique, comportant une unité de balayage (1), ladite unité de balayage comportant un capteur d'images (6), disposant d'une matrice bidimensuelle d'éléments photoélectriques, des moyens de lecture de caractères alphanumériques (10, 11, 12) sensibles aux signaux en provenance de ladite unité de balayage et destinés à lire des caractères alphanumériques balayés par ladite unité de balayage, des moyens de lecture de codes à barres (13, 14, 15, 16, 17, 18, 19, 20) sensibles aux signaux en provenance de ladite unité de balayage et destinés à lire un code à barres balayé par ladite unité de balayage et des moyens de sélection de sortie (21, 23) disposé de façon à sélectionner des signaux de sortie en provenance soit desdits moyens de lecture de caractères alphanumériques soit desdits moyens de lecture de code à barres selon que ce sont les caractères alphanumériques ou bien un code à barres qui sont balayés par ladite unité de balayage, caractérisé en ce que lesdits moyens de lecture de caractères alphanumériques et lesdits moyens de lecture de codes à barres sont couplés à des moyens de sélection ou de porte (21), lesdits moyens de sélection étant disposés de façon à mesurer la dimension d'une section d'un caractère ou d'un code à barres balayé pour bloquer soit lesdits moyens de lecture d'un code à barres soit lesdits moyens de lecture de caractères alphanumériques selon la dimension mesurée correspond à une partie d'un caractère alphanumérique ou à une partie d'un code à barres.

2. Un lecteur optique selon la revendication 1 dans lequel ladite dimension est la hauteur de ladite partie du caractère ou du code à barres balayé.

3. Un lecteur optique selon la revendication 1 ou 2, dans lequel lesdits moyen de sélection (21) sont agencés de façon à déduire la somme logique des signaux numériques binaires déduits d'un groupe d'éléments photoélectriques adjacents respectifs (Bk−1, Bk, Bk+1), à comparer ladite somme logique à la somme logique des signaux numériques binaires déduits d'un groupe adjacent desdits éléments photoélectriques et à mesurer ladite dimension en comparant de façon répétitive lesdites sommes logiques jusqu'à ce que l'on trouve des sommes logiques qui diffèrent l'une de l'autre.

4. Un lecteur optique selon l'une quelconque des revendications précédentes, dans lequel lesdits moyens de lecture de codes à barres (13, 14, 15, 16, 17, 18, 19, 20) comportent des moyens (13, 14, 15, 16) destinés à mesurer la largeur de barre et des moyens de mémoire (17) contenant des données mémorisées représentant des largeurs standard de barres, lesdits moyens de lecture de code à barres étant disposés de façon à être déconnectés, même s'ils ne sont pas bloqués par lesdits moyens de sélection (21), si la largeur de barre mesurée ne correspond par une largeur standard de barre.

5. Un lecteur optique selon l'une quelconque des revendications précédentes dans lequel lesdits moyens de sélection de sortie (23) sont contrôlés par un signal binaire de contrôle en provenance desdits moyens de sélection (21).

6. Un lecteur optique selon l'une quelconque des revendications précédentes, dans lequel lesdits moyens de lecture de codes à barres (13, 14, 15, 16, 17, 18, 19, 20) sont disposés de façon à balayer les sorties numérisées desdits éléments photoélectriques à une fréquence d'horloge prédéterminée et à introduire des échantillons successifs de signaux numériques sur un compteur (16), ledit compteur étant disposé de façon à compter le nombre d'échantillons entre les transitions de signaux et à déduire la largeur de barre en fonction de ladite fréquence d'horloge.

7. Un lecteur optique selon l'une quelconque des revendications précédentes, dans lequel lesdits moyens de lecture de codes à barres (13, 14, 15, 16, 17, 18, 19, 20) sont disposés de façon à reconnaître des partie de "début" et de "fin" d'un code à barres et comportent un circuit de reconnaissance (20) sensible à l'ordre d'apparition des signaux correspondant aux barres claires et sombres entre lesdites parties de "début" et de "fin", afin de lire un caractère de codes à barres entre lesdites parties.

8. Un lecteur optique selon l'une quelconque des revendications précédentes, dans lequel lesdits moyens de lecture de codes à barres (13, 14, 15, 16, 17, 18, 19, 20) sont disposés de façon à "réarranger" les parties de "début" et de "fin" du code à barres à une distance prédéterminée et comportent un circuit de normalisation (18) du code à barres qui est disposé de façon à normaliser la largeur mesurée de la barre en fonction de la distance mesurée entre lesdites parties de "début" et de "fin".

9. Un lecteur optique selon l'une quelconque des revendications précédentes, dans lequel lesdits moyens de lecture d'un code à barres (13, 14, 15, 16, 17, 18, 19, 20) sont sensibles à la largeur et à couleur de la barre et sont disposés de façon à reconnaître des caractères d'un code à barres en comparant les modèles détectés de largeur et de couleur de barres avec les modèles mémorisés de largeur et de couleur de barre.

FIG.1.

FIG.2.

FIG.3.

# FIG.4.

4 9 2 6 4 5 1 7 3 8 8 5 8

# FIG.5.

Bk-1
Bk
Bk+1

31

ROM

32

REGISTER

33

3

# FIG.6.

(a) clock timing

(b) binary signal

(c) black bar pulse

(d) white bar pulse

(e) normalized number of black bars.

(f) normalized number of white bars.